Europäisches Patentamt

European Patent Office

Office européen des brevets

(11) Publication number: **0 562 597 A1**

# EUROPEAN PATENT APPLICATION

(21) Application number: 93104936.5

(22) Date of filing: **25.03.93**

(51) Int. Cl.⁵: **C04B 38/00**, C04B 35/80, B01D 39/00

(30) Priority: **27.03.92 JP 71235/92**

(43) Date of publication of application:
**29.09.93 Bulletin 93/39**

(84) Designated Contracting States:
**DE FR GB**

(71) Applicant: **NIPPON SOKEN, INC.**
**14, Iwaya Shimohasumi-cho**
**Nishio-shi Aichi-Ken(JP)**

(72) Inventor: **Yamamoto, Takashi**
**13, Kannonshita, Katahara-cho**
**Gamagori-shi, Aichi(JP)**
Inventor: **Nakanishi, Tomohiko**
**7-4, Hanehigashi-cho 3-chome**
**Okazaki-shi, Aichi(JP)**
Inventor: **Yasuda, Eturou**
**18-8, Ueji 5-chome**
**Okazaki-shi, Aichi(JP)**

(74) Representative: **Klingseisen, Franz, Dipl.-Ing.**
**et al**
**Dr. F. Zumstein sen. Dr. E. Assmann Dr. R.**
**Koenigsberger Dr. F. Zumstein jun. Dipl.-Ing.**
**F. Klingseisen Bräuhausstrasse 4**
**D-80331 München (DE)**

(54) **Fiber-reinforced porous body and particulate trap filter composed of the same.**

(57) A fiber-reinforced porous body wherein a matrix 1 comprising a porous cordierite contains SiC short fibers 4 longer than a mean pore diameter in the matrix 1. This porous body can be used suitably as a particulate trap filter.

*Fig. 3*

## BACKGROUND OF THE INVENTION

### 1. Field of the Invention

This invention relates to a material of a filter for trapping particulates such as carbon contained in an exhaust gas of an internal combustion engine, and the like.

### 2. Description of the Related Art

Particulates such as carbon are contained in an exhaust gas of an internal engine of a car, and so forth. The particulates are mostly emitted into the air and are one source of air pollution. Therefore, it has become necessary to trap and burn the particulates to restrict emission of the particulates into the air.

A ceramic filter such as a foam filter or a honeycomb filter has been proposed as a filter for trapping the particulates. Generally, such a filter is used for a long time and regeneration is carried out by periodically burning the particulates thus trapped. This regeneration treatment is carried out generally by an external ignition means such as a heater or a burner disposed outside the filter.

When the particulates are burnt and the burning propagates, however, a drastic temperature gradient occurs between a high temperature portion where the particulates are burnt and a low temperature portion where they are not burnt, and there remains a problem that the filter is destroyed by a thermal stress occurring between these portions.

## SUMMARY OF THE INVENTION

An object of the present invention is to provide a material which is not destroyed by a thermal stress occurring due to a drastic temperature gradient.

The present invention relates to a fiber-reinforced porous body comprising a matrix of porous cordierite which contains SiC short fibers longer than a mean pore diameter in the matrix.

Another aspect of the present invention relates to a particulate trap filter comprising the above fiber-reinforced porous body.

## BRIEF DESCRIPTION OF THE DRAWINGS

Fig. 1 is a schematic sectional view of a filter material according to the prior art.

Fig. 2 is a schematic sectional view of a filter material according to the prior art in which SiC whiskers smaller than the diameter of pores are mixed.

Fig. 3 is a schematic sectional view of a porous body according to the present invention in which SiC short fibers greater than the diameter of pores are mixed in the conventional filter material.

Figs. 4A, 4B and 4C are graphs showing test results of four-point bending tests of Example 1 and Comparative Examples 1 and 2, respectively.

## DESCRIPTION OF THE PREFERRED EMBODIMENTS

The material used for the matrix described above is cordierite, because it has high thermal-resistance and moreover, its thermal expansion coefficient is small.

The material of the short fibers is SiC, because it has higher strength than cordierite as the matrix material, and does not react with cordierite when cordierite is sintered, provided that the atmosphere is an inert atmosphere.

The porous body preferably has a pore volume of 0.3 to 1.0 mℓ/g and a mean pore diameter of 5 to 100 μm. This is because, when this porous body is used for a particulate trap filter, particularly for a diesel particulate trap filter, pressure drop of a filter becomes too high and a load on an engine becomes excessive if the pore volume is smaller than 0.3 mℓ/g or the mean pore diameter is smaller than 5 μm.

On the other hand, if the pore volume is greater than 1.0 mℓ/g or if the mean pore diameter is greater than 100 μm, the particulates undergo blow-by and the function of the filter is not realized.

The reason why the length of the SiC short fibers must be greater than the length of the mean pore diameter in the matrix will be discussed after Example 1 and Comparative Examples 1 and 2.

The content of the SiC short fibers in the matrix is preferably 0.5 to 50 parts by weight per 100 parts by weight of the matrix. If it is smaller than 0.5 parts by weight, the effect of the addition of the SiC short fibers will be insufficient and if it is greater than 50 parts by weight, on the other hand, much improvement in performance cannot be expected.

The diameter of the SiC short fibers is preferably 1 to 50 $\mu$m. If it is smaller than 1 $\mu$m, the production of the SiC short fibers becomes extremely difficult and the effect of the addition will not be exhibited unless the amount of the addition is increased. If it is greater than 50 $\mu$m, on the other hand, it becomes difficult to retain the shape of the fiber.

Hereinafter, Examples and Comparative Examples will be given. In these Examples, the term "part(s)" represents the "part(s) by weight".

Example 1

First, 17.79 parts of molten silica, 36.24 parts of coarse talc, 22.99 parts by aluminum hydroxide ("Hydirite H-32", trade name, manufactured by Showa Denko K.K.), 22.99 parts of aluminum hydroxide ("Hydirite H-42", trade name, manufactured by Showa Denko K.K.), 20 parts of carbon SGP50, and 10 parts of SiC short fibers having a diameter of about 10 $\mu$m and a fiber length of about 3 mm ("Nikalon", trade name, manufactured by Nippon Carbon K.K.) were prepared. Water was then added to form a slurry and the starting materials were dispersed by a mixer. After the slurry was dried, 9 parts of methyl cellulose as a binder and 30 parts of water were added, and the mixture was kneaded by a kneader to obtain a plasticine. The resulting plasticine was pressed by a press machine to a thickness of 0.5 mm. After drying, the pressed article was cut to 90 $\times$ 90 mm. In this way, a sheet of 0.5 mm $\times$ 90 mm $\times$ 90 mm was obtained. The sheet was first baked at 1,000°C for 2 hours in the atmosphere so as to burn the binder and carbon in the sheet and to render the sheet porous. Next, the temperature was raised to 1,420°C in $N_2$ so as to sinter cordierite without oxidizing the SiC short fibers. The sheet sintered in this way was a porous body having a porosity of about 60%, a pore volume of about 0.6 m$\ell$/g and a mean pore diameter of about 35 $\mu$m. These values were suitable for trapping the particulates as a filter.

Next, a thermal shock resistance test was carried out in the following way. Only the central portion of the sheet thus obtained was heated rapidly and linearly by a gas burner so as to apply a thermal shock to the sheet. At this time, the surface temperature of the sheet was raised by bringing the flame of the burner close to the sheet. The maximum temperature at which the occurrence of cracks on the surface of the sheet was observed by eye was regarded as the fracture temperature of the sheet (material). In this sheet, no crack occurred even when heat was increased up to 1,050°C.

Comparative Example 1

A sheet was produced in the same way as in Example 1 under the condition of the same production method, the same pore volume and the same mean pore diameter except that the SiC short fibers were not incorporated. When the thermal shock resistance test was carried out for this sheet of the porous body, in the same way as in Example 1, cracks occurred at 850°C.

Comparative Example 2

A sheet was produced in the same way as in Example 1 under the condition of the same production method, the same pore volume and the same mean pore diameter except that 10 parts of SiC whiskers having a diameter of about 0.3 $\mu$m and a length of about 30 $\mu$m were used in place of the SiC short fibers used in Example 1. When the thermal shock test was carried out for this sheet of the porous body in the same way as in Example 1, cracks occurred at 860°C.

According to the three kinds of the thermal shock resistance tests described above, no cracks occurred even at 1,050°C in Example 1, whereas they occurred at 850°C in Comparative Example 1 and at 860°C in Comparative Example 2. The reason is assumed to be as follows.

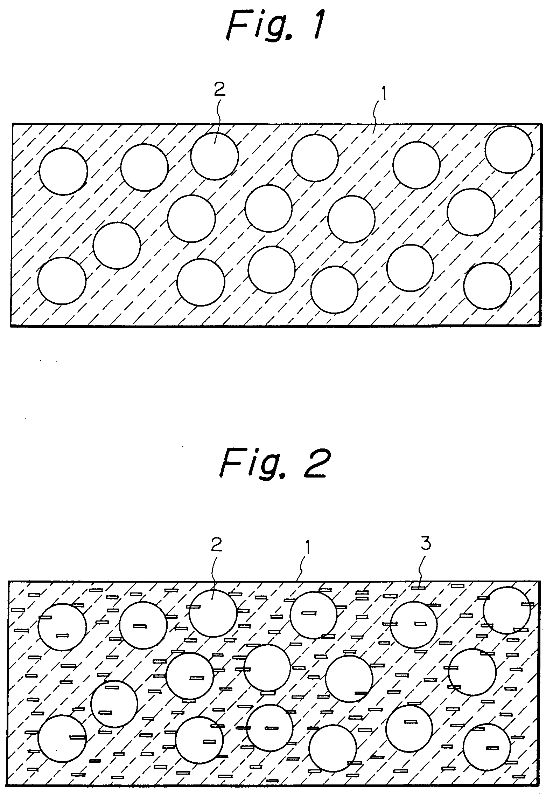

Comparative Example 1 corresponds to the filter material of the prior art, and its structural model is shown in Fig. 1. When this sheet is rapidly heated by the gas burner, a thermal stress due to a drastic temperature gradient develops in cordierite as the matrix. When the thermal stress reaches the fracture strength of the sheet, cracks occur in the sheet. Since the toughness of this sheet is low, the resulting cracks proceed, and can be observed with eye.

In contrast, in Comparative Example 2, the SiC whiskers shorter than the diameter of the pores are mixed in the filter material of the prior art. A structural model thereof is shown in Fig. 2.

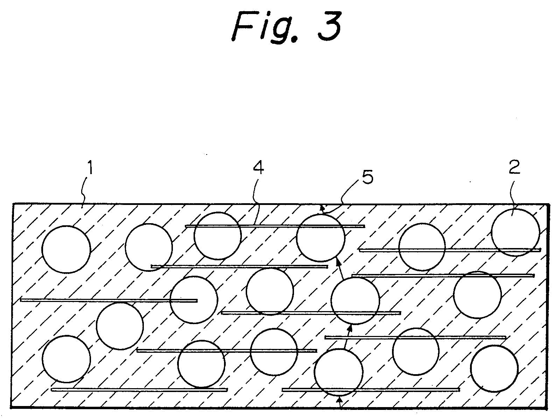

In the Example 1, the Sic short fibers longer than the diameter of the pores are mixed in the filter material according to the prior art. A structural model thereof is shown in Fig. 3. The SiC short fibers 4 have a fracture strength which is by far higher than that of the matrix (cordierite) 1. Accordingly, if the cracks 5 are to proceed in the structural model of Example 1, the cracks 5 must break the SiC short fibers 4 existing in this model which are longer than the diameter of the pores 1, or must pull them out or must bypass them. It is believed that due to such a mechanism, the toughness is improved and the development of the cracks can be prevented drastically.

This phenomenon hardly occurs in the case of Comparative Example 2, because the cracks generally proceed in weak portions of a material. Therefore, if defects such as pores do not exist in the material, the toughness can be improved even by the SiC whiskers used in Comparative Example 2. However, since a large number of pores exist in the porous body, the cracks may pass between the fibers even when the short fibers smaller than the diameter of the pores are incorporated. The energy necessary for this bypassing may be small if the fibers are short. The toughness can be improved to an extent corresponding to such an energy, but this effect of improvement is believed to be very small. The reason why the fracture temperature in Comparative Example 2 is somewhat higher than that of Comparative Example 1 is believed to be the result of the necessity of energy for bypassing.

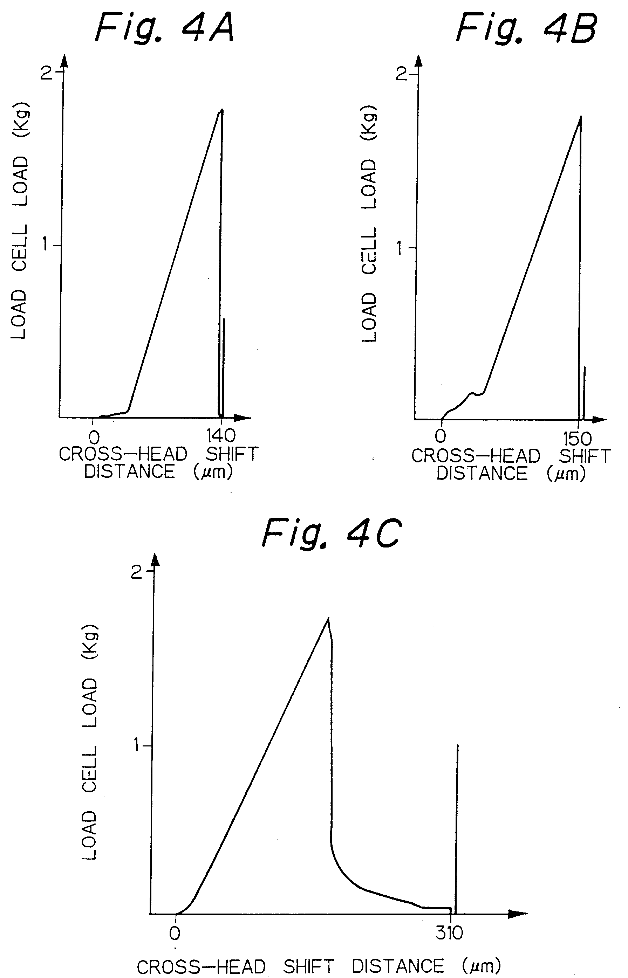

Generally, the fracture toughness is measured for compact materials in which pores hardly exist, and such a measurement has essentially not been made for the porous materials such as described above. Accordingly, the fracture toughness cannot be evaluated quantitatively. However, qualitative evaluation was carried out for each of Example 1 and Comparative Examples 1 and 2 in the following way. A testpiece having a size of 3 mm × 10 mm × 40 mm was produced from the plasticine of each Example, and a four-point bending test with a lower span of 30 mm and an upper span of 10 mm was made. The cross-head speed was 0.2 mm/min. The results are shown in Fig. 4(A) (Comparative Example 1), 4(B) (Comparative Example 2) and 4(C) (Example 1). In Comparative Examples 1 and 2, each testpiece was broken immediately after the maximum load but in the case of the testpiece of Example 1, the load gradually decreased even after the maximum load and then the testpiece was broken. This difference is assumed to result from the large difference of the toughness.

To sum up the discussion described above, the improvement in the thermal shock resistance in Example 1 is believed to result from the improvement in the toughness which was brought forth by the addition of the SiC short fibers.

Examples 2 to 12, Comparative Example 3

Table 1 illustrates the test results of the thermal shock resistance in Examples 2 to 12 and in Comparative Example 3. The results of Example 1 and Comparative Examples 1 and 2 are also illustrated for ready reference. The differences of these Examples and Comparative Examples from Example 1 reside in (1) the length of the SiC short fibers added, (2) the proportion, (3) the pore volume of the materials produced, and (4) the mean pore diameter, and the rest are the same as in the Example 1.

### Table 1

| | | pore volume (cc/g) | mean pore diameter (µm) | SiC short fiber length (µm) | proportion (parts) | fracture temperature (°C) |
|---|---|---|---|---|---|---|
| Example | 1 | 0.6 | 35 | 3000 | 10 | >1050 |
| | 2 | 0.6 | 35 | 3000 | 5 | >1050 |
| | 3 | 0.6 | 35 | 3000 | 20 | >1050 |
| | 4 | 0.6 | 35 | 5000 | 5 | >1050 |
| | 5 | 0.6 | 35 | 1000 | 5 | >1050 |
| | 6 | 0.6 | 35 | 100 | 5 | >1050 |
| | 7 | 0.6 | 35 | 50 | 5 | 900 |
| | 8 | 0.6 | 35 | 50 | 10 | 950 |
| | 9 | 0.6 | 35 | 50 | 20 | 1000 |
| | 10 | 0.4 | 15 | 50 | 5 | 1000 |
| | 11 | 0.8 | 90 | 100 | 5 | 900 |
| | 12 | 0.8 | 90 | 200 | 5 | >1050 |
| Comparative Example | 1 | 0.6 | 35 | – | – | 850 |
| " | 2 | 0.6 | 35 | (SiC whisker) 30 | 10 | 860 |
| " | 3 | 0.8 | 90 | 50 | 20 | 860 |

The present invention provides a porous cordierite which is not destroyed even by a thermal stress resulting from a drastic temperature gradient.

## Claims

1. A fiber-reinforced porous body comprised of a matrix comprising a porous cordierite containing SiC short fibers longer than a mean pore diameter in the matrix.

2. A fiber-reinforced porous body according to claim 1, wherein the content of the SiC short fibers in the matrix is 0.5 to 50 parts by weight based on 100 parts by weight of the matrix.

3. A fiber-reinforced porous body according to claim 1, wherein the diameter of the SiC short fiber in the matrix is 1 to 50 µm.

4. A particulate trap filter composed of a fiber-reinforced porous body comprised of a matrix comprising a porous cordierite containing SiC short fibers longer than a mean pore diameter in the matrix.

5. A particulate trap filter composed of a fiber-reinforced porous body comprised of a matrix comprising a porous cordierite containing SiC short fibers longer than a mean pore diameter in the matrix, and said porous body having a pore volume of 0.3 to 1.0 mℓ/g and a mean pore diameter of 5 to 100 µm.

# Fig. 1

# Fig. 2

# Fig. 3

# Fig. 4A

# Fig. 4B

# Fig. 4C

## DOCUMENTS CONSIDERED TO BE RELEVANT

EP 93104936.5

| Category | Citation of document with indication, where appropriate, of relevant passages | Relevant to claim | CLASSIFICATION OF THE APPLICATION (Int. Cl.5) |
|---|---|---|---|
| A | US - A - 4 710 435<br>(NAKANO et al.)<br>    * Claims * | 1-5 | C 04 B 38/00<br>C 04 B 35/80<br>B 01 D 39/00 |
| A | EP - A - 0 198 977<br>(CORNING GLASS WORKS)<br>    * Claims * | 1-5 | |
| A | EP - A - 0 260 704<br>(DR. C. OTTO FEUERFEST GMBH)<br>    * Claims * | 1-5 | |

TECHNICAL FIELDS
SEARCHED (Int. Cl.5)

C 04 B
C 03 C
B 01 D
B 01 J

The present search report has been drawn up for all claims

| Place of search | Date of completion of the search | Examiner |
|---|---|---|
| VIENNA | 22-06-1993 | BECK |